# EUROPEAN PATENT APPLICATION

(11) **EP 3 232 385 A1**
(43) Date of publication of application: **18.10.2017**
(21) Application number: 16204017.4
(22) Date of filing: 14.12.2016
(51) Int. Cl.: G06Q 10/10, G06F 9/46, G06F 21/31

(54) **METHOD, DEVICE AND SYSTEM FOR EXECUTING BUSINESS PROCESS**

(30) Priority: 14.04.2016 CN 201610230765
(71) Applicant: Beijing Xiaomi Mobile Software Co., Ltd., Beijing 100085 (CN)
(72) Inventor: YIN, Mingjun, Beijing, Beijing 100085 (CN); MENG, Deguo, Beijing, Beijing 100085 (CN); HOU, Enxing, Beijing, Beijing 100085 (CN)
(74) Representative: Jeffrey, Philip Michael

(57) **Abstract**

The present disclosure relates to a method, device and system for executing a business process, and pertains to the technical field of computer. The method includes: receiving (103) a business process request sent by a first terminal, wherein the business process request carries a target identification; determining a second terminal corresponding to the target identification according to a pre-stored corresponding relationship between identification information and verification terminals, and sending a verification request to the second terminal (104); and when receiving a verification confirmation message sent by the second terminal, executing (105) a business process corresponding to the business process request. By utilizing the present disclosure, the account security may be improved.

## Description

### TECHNICAL FIELD

The present disclosure generally relates to the technical field of computers, and more particularly, to a method, device and system for executing a business process.

### BACKGROUND

With development of computer technology, the types of application programs become more and more, and network services (network businesses) also become richer and more colorful. As for the network service (such as network payment, and viewing of important documents) having a relatively high security, in addition to setting an account and a login password for one application program, a user also needs to set an independent business performing password.

In related art, when a user B wants to use an account of a user A to execute a certain network business having a high security, in the case that a terminal has already logged in to the account of the user A (generally an automatic login is set), the user B may inquire the user A of the business performing password for the network business of this account, after the user A informs the user B of the corresponding business performing password, the user B may use the account of the user A to execute the network business.

During implementation of the present disclosure, the inventor finds at least the following problems existing in the related art.

Generally, the user A only wants to authorize the user B to use his account for performing a certain network business provisionally. However, after the user A notifies the business performing password to the user B, the user B may use the business performing password later on, which results in an influence on the account security.

### SUMMARY

In order to overcome the problems existing in the related art, the present disclosure provides a method for performing a business process. The technical solutions are as follows.

According to a first aspect of embodiments of the present disclosure, there is provided a method for performing or executing a business process, including:
receiving a business process request sent by a first terminal, wherein the business process request carries therein a target identification;
determining a second terminal corresponding to the target identification according to a pre-stored corresponding relationship between identification information and verification terminals, and sending a verification request to the second terminal; and
when a verification confirmation message sent by the second terminal is received, performing a business process corresponding to the business process request.

The executing the business process corresponding to the business process request when receiving the verification confirmation message sent by the second terminal may include:
when receiving the verification confirmation message sent by the second terminal, and a verification password carried in the verification confirmation message is matched with a pre-stored verification password corresponding to the target identification, executing the business process corresponding to the business process request.

In this way, it may be avoided that the first terminal is triggered by mistake to send the verification confirmation message.

Alternatively, the business process request carries a terminal identification of the first terminal; and
the sending the verification request to the second terminal includes:
sending the verification request carrying the terminal identification of the first terminal to the second terminal.

In this way, the user may know which terminal requests the verification.

Alternatively, the method further includes:
receiving a verification terminal setting request sent by the first terminal; and
determining a target account corresponding to the target identification, and sending a terminal identification of at least one terminal which has logged in to the target account to the first terminal;
receiving a terminal identification of the selected second terminal sent by the first terminal; and
adding the target identification and the second terminal into the corresponding relationship between the identification information and the verification terminals.

In this way, the verification terminal may be quickly set.

According to a second aspect of embodiments of the present disclosure, there is provided a method for executing a business process, including:
receiving a business process instruction in a remote verification mode inputted by a user; and
sending a business process request to a server, wherein the business process request carries a target identification for enabling the server to determine a second terminal corresponding to the target identification according to a pre-stored corresponding relationship between identification information and verification terminals, send a verification request to the second terminal, and when receiving a verification confirmation message sent by the second terminal, execute a business process corresponding to the business process request.

The method may further include:
receiving a verification terminal setting instruction inputted by a user, and sending a verification terminal setting request to the server;
receiving a terminal identification, sent from the server, of at least one terminal which has logged in to a target account corresponding to the target identification;
displaying the received terminal identification of at least one terminal; and
when receiving a verification terminal selecting instruction inputted by the user, sending the terminal identification of the second terminal selected by the verification terminal selecting instruction to the server.

In this way, the user may select the verification terminal by himself/herself.

According to a third aspect of embodiments of the present disclosure, there is provided a server, including:
a receiving module configured to receive a business process request sent by a first terminal, wherein the business process request carries a target identification;
a sending module configured to determine a second terminal corresponding to the target identification carried in the business process request received by the receiving module according to a pre-stored corresponding relationship between identification information and verification terminals, and send a verification request to the second terminal; and
an executing module configured to, when receiving a verification confirmation message sent by the second terminal, execute a business process corresponding to the business process request.

The executing module may be configured to:
when receiving the verification confirmation message sent by the second terminal, and a verification password carried in the verification confirmation message is matched with a pre-stored verification password corresponding to the target identification, execute the business process corresponding to the business process request.

Alternatively, the business process request carries a terminal identification of the first terminal; and
the sending module is configured to:
send the verification request carrying the terminal identification of the first terminal to the second terminal.

Alternatively, the receiving module is further configured to receive a verification terminal setting request sent by the first terminal;
the sending module is further configured to determine a target account corresponding to the target identification, and send a terminal identification of at least one terminal which has logged in to the target account to the first terminal;
the receiving module is further configured to receive a terminal identification of the selected second terminal sent by the first terminal; and
the server further includes:
an adding module configured to add the target identification and the second terminal into the corresponding relationship between the identification information and the verification terminals.

According to a fourth aspect of embodiments of the present disclosure, there is provided a first terminal, including:
a receiving module configured to receive a business process instruction in a remote verification mode inputted by a user; and
a sending module configured to send a business process request corresponding to the business process instruction received by the receiving module to a server, wherein the business process request carries a target identification for enabling the server to determine a second terminal corresponding to the target identification according to a pre-stored corresponding relationship between identification information and verification terminals, send a verification request to the second terminal, and when receiving a verification confirmation message sent by the second terminal, execute a business process corresponding to the business process request.

The sending module may be further configured to:
receive a verification terminal setting instruction inputted by a user, and send a verification terminal setting request to the server;
the receiving module is further configured to:
   receive terminal identifications of all the terminals which have logged in to a target account corresponding to the target identification sent by the server;
   the first terminal further includes:
      a displaying module configured to display the received terminal identifications of all the terminals or at least one terminal; and
      the sending module is further configured to,
      when receiving a verification terminal selecting instruction inputted by the user, send the terminal identification of the second terminal selected by the verification terminal selecting instruction to the server.

According to a fifth aspect of embodiments of the present disclosure, there is provided a system for executing a business process, the system including a server and a first terminal, wherein
the first terminal receives a business process instruction in a remote verification mode inputted by a user and sends a business process request to the server, the business process request carrying a target identification; and
the server receives the business process request sent by the first terminal, the business process request carrying the target identification; determines a second terminal corresponding to the target identification according to a pre-stored corresponding relationship between identification information and verification terminals, and sends a verification request to the second terminal; and when receiving a verification confirmation message sent by the second terminal, executes a business process corresponding to the business process request.

According to a sixth aspect of embodiments of the present disclosure, there is provided a server, including:
a processor; and
a memory for storing instructions executable by the processor;
wherein the processor is configured to:
   receive a business process request sent by a first terminal, wherein the business process request carries a target identification;
   determine a second terminal corresponding to the target identification according to a pre-stored corresponding relationship between identification information and verification terminals, and send a verification request to the second terminal; and
   when receiving a verification confirmation message sent by the second terminal, execute a business process corresponding to the business process request.

According to a seventh aspect of embodiments of the present disclosure, there is provided a first terminal, including:
a processor; and
a memory for storing instructions executable by the processor;
wherein the processor is configured to:
   receive a business process instruction in a remote verification mode inputted by a user; and
   send a business process request to a server, wherein the business process request carries a target identification for enabling the server to determine a second terminal corresponding to the target identification according to a pre-stored corresponding relationship between identification information and verification terminals, send a verification request to the second terminal, and when receiving a verification confirmation message sent by the second terminal, execute a business process corresponding to the business process request.

According to another aspect there is provided a computer program, which when executed on a processor of a server, performs a method as described above.

According to another aspect there is provided a computer program, which when executed on a processor of a first terminal, performs a method as described above.

The technical solutions provided by the embodiments of the present disclosure may have the following beneficial effects.

In the embodiments of the present disclosure, the business process request sent by the first terminal is received, the business process request carrying a target identification; a second terminal corresponding to the target identification is determined according to the pre-stored corresponding relationship between the identification information and the verification terminals and a verification request is sent to the second terminal; and when receiving a verification confirmation message sent by the second terminal, a business process corresponding to the business process request is executed. In this way, the user, when allowing other users to use his/her account to execute the business process, may directly use the verification terminal to verify the business process request without notifying the business executing password to the other users, thereby the account security may be improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of performing a business process, according to an exemplary embodiment.
Fig. 2 is a schematic diagram showing an interface display of a first terminal, according to an exemplary embodiment.
Fig. 3 is a schematic diagram showing an interface display of a second terminal, according to an exemplary embodiment.
Fig. 4 is a schematic diagram showing an interface display of a second terminal, according to an exemplary embodiment.
Fig. 5 is a flow chart of performing a business process, according to an exemplary embodiment.
Fig. 6 is a structural schematic diagram of a server, according to an exemplary embodiment.
Fig. 7 is a structural schematic diagram of a server, according to an exemplary embodiment.
Fig. 8 is a structural schematic diagram of a first terminal, according to an exemplary embodiment.
Fig. 9 is a structural schematic diagram of a first terminal, according to an exemplary embodiment.
Fig. 10 is a structural schematic diagram of a server, according to an exemplary embodiment.
Fig. 11 is a structural schematic diagram of a terminal, according to an exemplary embodiment.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Another exemplary embodiment of the present disclosure provides a method for performing a business process. The method for performing a business process may be implemented by a server and a first terminal together. The server may be a background server (which may be abbreviated as a server) of an application program (such as a cloud application program), and the server may be provided with a processor, a memory, a transceiver, and the like, wherein the processor is used for executing a procedure of the business process, the memory may be used for storing data required during performing the business process and the generated data, and the transceiver may be used for receiving and sending messages. The first terminal may be a smart phone, a tablet computer, a smart TV, and the like, and the terminal may be installed with an application program of a target network business. The first terminal may be provided with a processor, a memory, a transceiver, and the like, wherein the processor is used for executing a procedure of the business process, the memory may be used for storing data required during performing the business process and the generated data, and the transceiver may be used for receiving and sending messages. The first terminal may also be provided with an input/output device, such as a screen. The screen may be used for displaying an application program interface and the like, and the screen may be a touch screen.

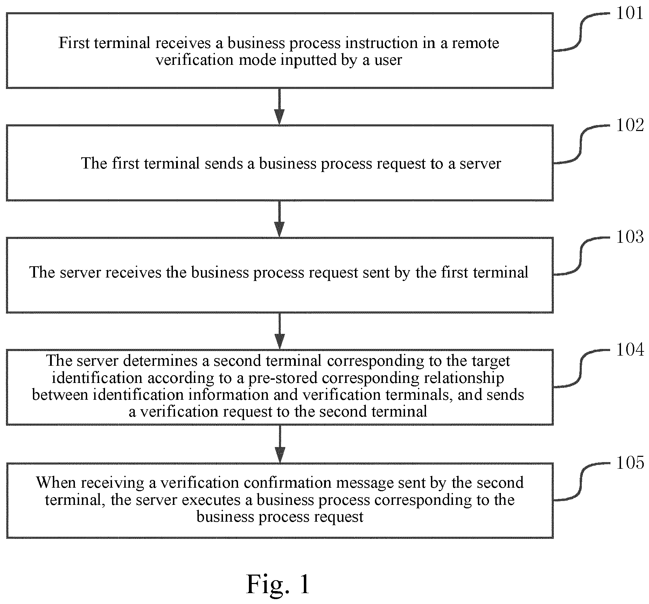

As shown in Fig. 1, the process flow of the method may include the following steps.

In step 101, a first terminal receives a business process instruction in a remote verification mode inputted by a user.

During implementation, a user A may install an application program in the first terminal and trigger to start the application program, then the user A may use a target account to log in the application program, and may set a verification terminal for a network business in the application program. The procedure of setting the verification terminal will be described in detail later.

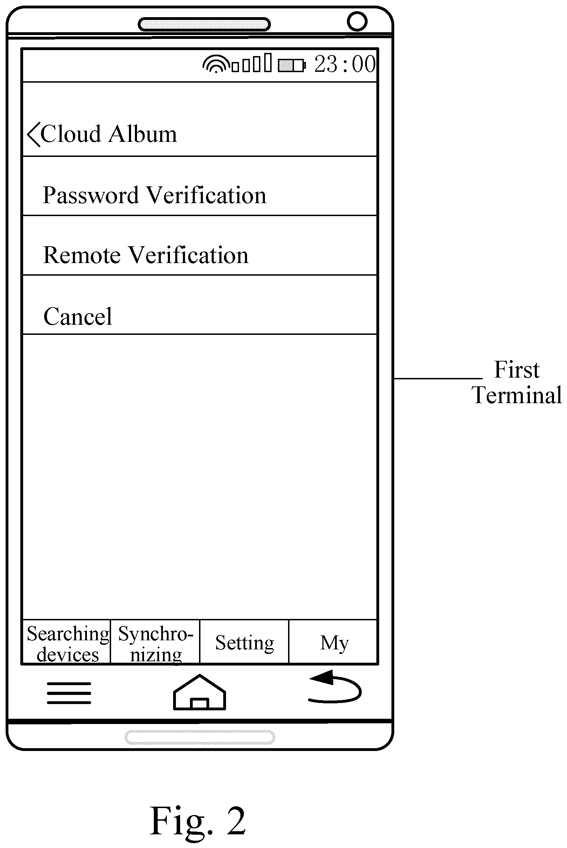

Every time the first terminal logs in the application program with the target account, the first terminal records a target identification (the target identification is a unique identification for identifying the target account logged in by the first terminal, and this identification may be an ID (Identity) of the target account, a connection identification between the first terminal and a server, or the like) corresponding to the target account. When a user B uses the first terminal, the application program is directly logged in with the target account. When the user B wants to perform a target network business (such as viewing of a cloud album, and payment) in the application program logged in with the target account, as shown in Fig. 2, he/she may click an option of the target network business to trigger the first terminal to display an option of password verification, and an option of remote verification, then the user B may click the option of remote verification, and the first terminal receives a business process instruction inputted by the user B. For example, the user A sets a remote verification for a cloud album of a smart TV in house. When the user B turns on the smart TV in house of the user A, since the user A has used the target account to log in the application program previously, when the smart TV is turned on, the application program is directly logged in with the target account. When the user B wants to view the cloud album in the application program in the smart TV, he/she may click an icon of the cloud album, to trigger the smart TV to display the option of password verification, and the option of remote verification, then the user may click the option of remote verification, and the smart TV may receive an instruction of viewing the cloud album.

In addition, when the user B wants to perform the target network business, an option of the target network business may be clicked to trigger the first terminal to display the option of password verification, and the option of remote verification. The user B may click the option of remote verification to trigger the first terminal to display an input box for user information, and the user B may input information of himself/herself (such as his/her name) in the input box for user information, then click a confirmation key, and afterwards, the first terminal receives the business process instruction inputted by the user B.

In step 102, the first terminal sends a business process request to the server, wherein the business process request carries therein a target identification.

The target identification is identification information for uniquely identifying the target account logged in by the first terminal. The target identification may be an ID (Identity) of the target account, a connection identification between the first terminal and the server, or the like.

During implementation, when the business process instruction inputted by the user is detected, the first terminal may send a business process request to the server, the business process request carrying therein a business identification of the target network business. For example, when the user B clicks a viewing key in the cloud album, upon detecting the instruction of viewing the cloud album inputted by the user, the smart TV may send a request for viewing the cloud album to the server.

Alternatively, the business process request sent by the first terminal to the server carries a terminal identification of the first terminal.

The terminal identification of the first terminal may be a terminal type, such as Redmi, and Xiaomi TV. The terminal identification of the first terminal may also be a name set by the user for the first terminal.

During implementation, when the business process instruction inputted by the user is detected, the first terminal may acquire the terminal identification of the first terminal, and then send a business process request to a server, the business process request carrying the terminal identification of the first terminal, and a business identification of the target network business.

In step 103, the server receives the business process request sent by the first terminal, the business process request carrying the target identification.

The target identification is an identification for uniquely identifying the target account logged in by the first terminal. The identification may be an ID (Identity) of the target account, a connection identification between the first terminal and the server, or the like.

During implementation, after receiving the business process request sent by the first terminal, the server may parse the business process request so as to obtain the target identification and the business identification of the target network business.

In step 104, the server determines a second terminal corresponding to the target identification according to a pre-stored corresponding relationship between identification information and verification terminals, and sends a verification request to the second terminal.

The second terminal may be a mobile phone, a tablet computer, and the like, and may log in to the target account. The second terminal is a verification terminal provided for the target account (i.e., the account logged in by the first terminal) by the user. When the first terminal requests the server to execute a business process under a state of logging in to the target account, the business process can be performed only when obtaining the verification of the second terminal. The verification request is sent by the server to the verification terminal, for inquiring whether the user of the verification terminal agrees to perform the corresponding business process, such as viewing the cloud album.

During implementation, the server may store a corresponding relationship between the identification information and the verification terminals in advance. The procedure of storing the corresponding relationship between the identification information and the verification terminals would be described in detail hereinafter. After receiving the business process request sent by the first terminal, the server may determine the target identification of the target account logged in by the first terminal, then may look for the second terminal (i.e., the verification terminal preset for the target network business) corresponding to the target identification among the pre-stored corresponding relationship between the identification information and the verification terminals, and then send the verification request to the second terminal, wherein the verification request may carry the business identification of the target network business.

In addition, when sending the verification request, the server may also send user information of the first terminal to the second terminal. The user information of the first terminal may be obtained by parsing the business process request sent by the first terminal.

Alternatively, the business process request carries the terminal identification of the first terminal, and the server sends the verification request carrying the terminal identification of the first terminal to the second terminal.

The terminal identification of the first terminal may be a terminal type, such as Redmi, and Xiaomi TV. The terminal identification of the first terminal may also be a name set by the user for the first terminal.

During implementation, after searching the second terminal according to the target identification from the pre-stored corresponding relationship between the identification information and the verification terminals, the server may acquire the terminal identification of the first terminal, and then send a verification request carrying the terminal identification of the first terminal to the second terminal.

In step 105, when receiving a verification confirmation message sent by the second terminal, the server executes a business process corresponding to the business process request.

The verification confirmation message is a message sent by the verification terminal to the server, for agreeing the server to execute the business process corresponding to the business process request.

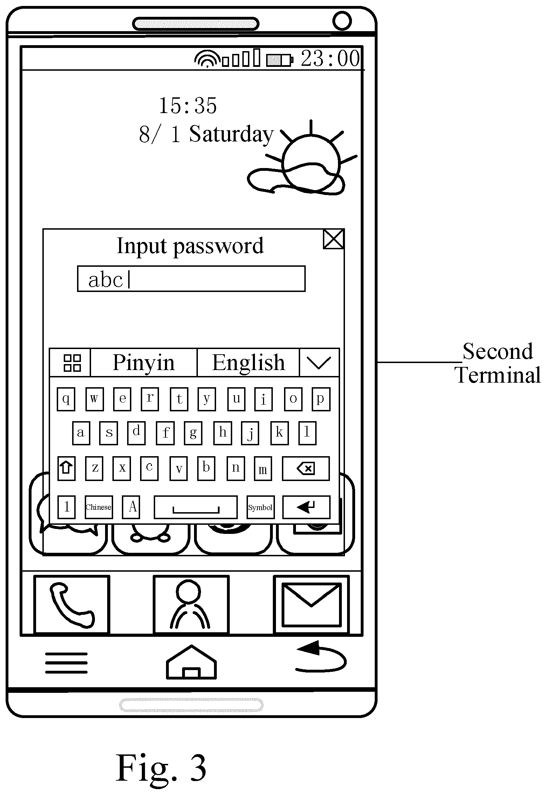

During implementation, as shown in Fig. 3, after receiving the verification request (such as a smart TV requesting to view a cloud album, and whether agreeing with the request of the first terminal for viewing the cloud album) sent by the server, the second terminal may display the verification request in an interface, then the user A may click a confirmation key, and after detecting a click instruction of the confirmation key, the second terminal may send the verification confirmation message to the server. After receiving the verification confirmation message sent by the second terminal, the server executes the business process corresponding to the business process request, and sends an execution result to the first terminal, and after receiving the execution result, the first terminal may display the execution result (such as displaying images in the cloud album in the first terminal). For example, when the second terminal receives a verification request from the first terminal for viewing a cloud album sent by the server, the user A may click the confirmation key, then after detecting the click instruction of the confirmation key, the second terminal may send the verification confirmation message for agreeing to view to the server, then after receiving the verification message of agreeing to view, the server may unlock a password of the cloud album with the password, and send the unlocked cloud album to the first terminal, and then after receiving the unlocked cloud album, the terminal may display the images in the unlocked cloud album.

In addition, the verification request sent by the server and received by the first terminal may be a verification request added with the user information, such as San ZHANG using a smart TV to request to view the cloud album, and whether to agree with San ZHANG to use the Redmi phone to view the cloud album.

Alternatively, the verification confirmation message may carry a verification password, and the corresponding process manner may be as follows: when receiving the verification confirmation message sent by the second terminal, and the verification password carried in the verification confirmation message is matched with a pre-stored verification password of the target account, executing the business process corresponding to the business process request.

During implementation, the server may store the verification password of the target account in advance. The procedure of storing the verification password of the target account in advance will be depicted in detail hereinafter.

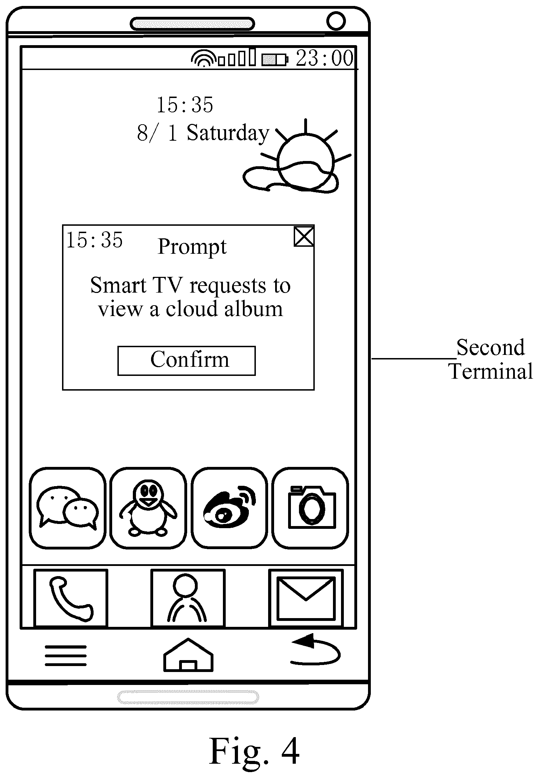

As shown in Fig. 4, after receiving the verification request (such as the first terminal requesting to view a cloud album, and whether agreeing with the request of the first terminal for viewing the cloud album) sent by the server, the second terminal may display the verification request in an interface, then the user A may click the verification request to trigger the second terminal to display an input box for verification password. The user A may input a verification password corresponding to the target network business in the input box for verification password, and then click the confirmation key to trigger the second terminal to send the verification confirmation message carrying the verification password to the server. After receiving the verification confirmation message sent by the second terminal, the server may parse the verification confirmation message, acquire the verification password carried in the verification confirmation message, and compare the acquired verification password with the pre-stored verification password of the target network business of the target account, and if they are matched, the business process corresponding to the business process request is executed, and an execution result is sent to the first terminal.

For example, the verification request sent by the server and received by the second terminal is the first terminal requesting to pay 23.68 yuan, then the user A may click the verification request to trigger the first terminal to display a password input box. Then the user A may input a verification password (such as 123856), and click the confirmation key to trigger the second terminal to send the verification confirmation message carrying the verification password to the server. After receiving the verification confirmation message, the server may parse the verification confirmation message and obtain that the verification password is 123856, then compare the verification password with the pre-stored password of the target account, and if they are matched, the server executes a payment operation, and sends a pay success message to the first terminal, and then the first terminal may display an interface of a successful payment.

In addition, different verification passwords may be set for respective network businesses (such as viewing a cloud album, payment, and viewing chat records) in the application program. When receiving the verification request for the target network business sent by the server, the second terminal may display the verification request (for example, the first terminal requests to view the cloud album, and the first terminal requests to pay 23.68 yuan) for the target network business in an interface, then the user A may click the verification request to trigger the second terminal to display an input box for verification password, after that, the user A may input a verification password corresponding to the target network business in the input box for verification password, and then click a confirmation key to trigger the second terminal to send a verification confirmation message carrying the verification password of the target network business to the server. After receiving the verification confirmation message sent by the second terminal, the server may parse the verification confirmation message to obtain the verification password of the target network business carried in the verification confirmation message, then compare the obtained verification password with a pre-stored verification password of the target network business of the target account, and if they are matched, the server executes a business process corresponding to the business process request.

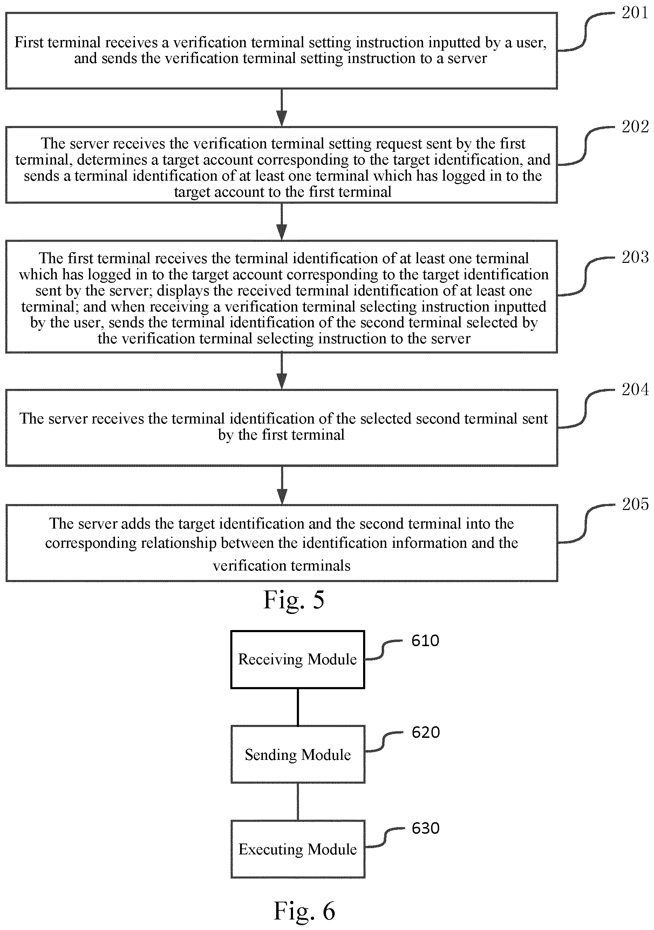

The present embodiment also provides a process for setting a verification terminal for the network business in the application program. As shown in Fig. 5, the corresponding process may be illustrated as the following flows.

In step 201, a first terminal receives a verification terminal setting instruction inputted by a user, and sends a verification terminal setting request to a server.

During implementation, a user A may use any application program installed in the terminal, use a target account to log in the application program, and then set a verification terminal for network businesses in the application program. One verification terminal may be uniformly set for many network businesses, or different verification terminals may be set for different network businesses. In the present embodiment, the procedure of setting the verification terminal for a target network business on the first terminal would be depicted in details.

The user A may install an application program in the first terminal, use the target account to log in the application program, and then may click a setting option in an interface to trigger the first terminal to display an access setting option, an interface setting option and some other options. The user A may click the access setting option to trigger the first terminal to display a network business option of access authority, and a uniform setting option (setting the verification terminals of all the network businesses to be identical). The user A may click the target network business option to trigger the first terminal to display an edit option, an authority setting option and some other options. The user A may click the authority setting option to trigger the first terminal to display a password setting option, and a verification terminal setting option. The user A may click the verification terminal setting option. After receiving the verification terminal setting instruction inputted by the user A, the first terminal may send the verification terminal setting request to the server, wherein the verification terminal setting request may carry a terminal identification of the first terminal and a business identification of the target network business.

In step 202, the server receives the verification terminal setting request sent by the first terminal, determines a target account corresponding to the target identification, and sends a terminal identification of at least one terminal which has logged in to the target account to the first terminal.

During implementation, every time the target account is in a logging status, the server may detect the terminal which logs in to the target account, then add a terminal identification of the terminal logging in to the target account this time into a corresponding relationship between the target account and the logged terminal. After receiving the verification terminal setting request sent by the first terminal, the server may parse the verification terminal setting request to obtain the terminal identification of the first terminal, and the business identification of the target network business, then determine the target identification corresponding to the target account with which the first terminal logs in, then determine, according to the target identification of the target account, the terminal identification of at least one terminal which has logged in to the target account among the corresponding relationship between the target identification and the terminal which has logged in, and then send the obtained terminal identifications of all the terminals to the first terminal.

In step 203, the first terminal receives the terminal identification of at least one terminal which has logged in to the target account corresponding to the target identification sent by the server; displays the received terminal identification of at least one terminal; and when receiving a verification terminal selecting instruction inputted by the user, sends the terminal identification of the second terminal selected by the verification terminal selecting instruction to the server.

During implementation, when receiving the terminal identification of at least one terminal which has logged in to the target account sent by the server, the first terminal may display the terminal identification of at least one terminal in the interface, then the user A may click the terminal identification of the second terminal, and when receiving the verification terminal selecting instruction inputted by the user A by clicking, the first terminal may send the terminal identification of the second terminal selected by the verification terminal selecting instruction to the server.

In addition, after receiving the terminal identifications of all the terminals which have logged in to the target account sent by the server, the first terminal may display the terminal identifications of all the terminals in the interface. Then the user A may click the terminal identification of the second terminal to trigger the first terminal to display an input box for verification password. The user A may input the verification password, and then click the confirmation key to trigger the first terminal to send the terminal identification of the second terminal and the verification password to the server.

In step 204, the server receives the terminal identification of the selected second terminal sent by the first terminal.

In step 205, the server adds the target identification and the second terminal into the corresponding relationship between the identification information and the verification terminals.

During implementation, after receiving the terminal identification of the second terminal selected by the user A sent by the first terminal, the server may obtain the target identification of the target account in to which the first terminal has logged, and the business identification of the target network business, then store the target identification of the target account and the terminal identification of the second terminal in the corresponding relationship between the identification information and the verification terminals, and when storing the target identification of the target account, storing in a remark the business identification of the target network business.

In addition, the server may also receive a verification password, acquire the target account in to which the first terminal logs and the business identification of the target network business, and stores the verification password as a verification password of the target network business of the target account.

In the embodiments of the present disclosure, the server receives the business process request sent by the first terminal, the business process request carrying a target identification; the server determines a second terminal corresponding to the target identification according to the pre-stored corresponding relationship between the identification information and the verification terminals and sends a verification request to a second terminal; when receiving a verification confirmation message sent by the second terminal, the server executes a business process corresponding to the business process request. In this way, the user, when allowing other users to use his/her account to execute the business process, may directly use the verification terminal to verify the business process request without notifying the business executing password to the other users, thereby the account security may be improved.

Another exemplary embodiment of the present disclosure further provides a server. As shown in Fig. 6, the server includes: a receiving module 610, a sending module 620, and an executing module 630.

The receiving module 610 is configured to receive a business process request sent by a first terminal, wherein the business process request carries a target identification.

The sending module 620 is configured to determine a second terminal corresponding to the target identification carried in the business process request received by the receiving module according to a pre-stored corresponding relationship between identification information and a verification terminal, and send a verification request to the second terminal.

The executing module 630 is configured to, when receiving a verification confirmation message sent by the second terminal, execute a business process corresponding to the business process request.

Alternatively, the executing module 630 is configured to:
when receiving the verification confirmation message sent by the second terminal, and a verification password carried in the verification confirmation message is matched with a pre-stored verification password corresponding to the target identification, execute the business process corresponding to the business process request.

Alternatively, the business process request carries a terminal identification of the first terminal.

The sending module 620 is configured to:
send a verification request carrying the terminal identification of the first terminal to the second terminal.

Alternatively, the receiving module 610 is further configured to receive a verification terminal setting request sent by the first terminal.

The sending module 620 is further configured to determine a target account corresponding to the target identification, send to the first terminal the terminal identification of at least one terminal which has logged in to the target account.

The receiving module 610 is further configured to receive a terminal identification of a selected second terminal sent by the first terminal.

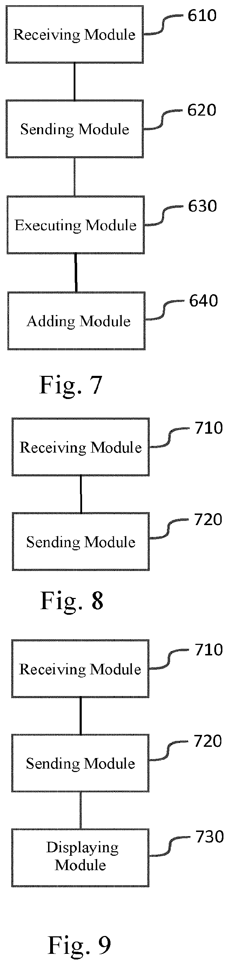

As shown in Fig. 7, the server further includes:
an adding module 640 configured to add the target identification and the second terminal into the corresponding relationship between the identification information and the verification terminal.

Based on the same technical concept, the embodiments of the present disclosure further disclose a first terminal. As shown in Fig. 8, the first terminal includes: a receiving module 710, and a sending module 720.

The receiving module 710 is configured to receive a business process instruction in a remote verification mode inputted by a user.

The sending module 720 is configured to send a business process request corresponding to the business process instruction received by the receiving module to a server, wherein the business process request carries a target identification for enabling the server to determine a second terminal corresponding to the target identification according to a pre-stored corresponding relationship between identification information and verification terminals, send a verification request to the second terminal, and when receiving a verification confirmation message sent by the second terminal, execute a business process corresponding to the business process request.

Alternatively, the sending module 720 is further configured to:
receive a verification terminal setting instruction inputted by a user, and send a verification terminal setting request to the server.

The receiving module 710 is further configured to:
receive a terminal identification of at least one terminal which has logged in to a target account corresponding to the target identification sent by the server.

As shown in Fig. 9, the first terminal further includes:
a displaying module 730 configured to display the received terminal identification of at least one terminal.

The sending module 720 is further configured to,
when receiving a verification terminal selecting instruction inputted by the user, send the terminal identification of the second terminal selected by the verification terminal selecting instruction to the server.

In the embodiments of the present disclosure, the server receives the business process request sent by the first terminal, the business process request carrying a target identification; the server determines a second terminal corresponding to the target identification according to the pre-stored corresponding relationship between the identification information and the verification terminals and sends a verification request to the second terminal; when receiving a verification confirmation message sent by the second terminal, the server executes a business process corresponding to the business process request. In this way, the user, when allowing other users to use his/her account to execute the business process, may directly use the verification terminal to verify the business process request without notifying the business executing password to the other users, thereby the account security may be improved.

With respect to the server and the first terminal in the above embodiments, the specific manners for performing operations for individual modules therein have been described in detail in the embodiments regarding the methods, which will not be elaborated herein.

It should be explained, when the server and the first terminal for executing the business process provided by the above embodiments execute the business process, the above divided functional modules are just taken as an example. In practical applications, the functions can be assigned to different functional modules according to requirements, namely, inner structures of the device may be divided into different functional modules to accomplish the whole or a part of functions described above. In addition, the method for executing a business process, and the server and the first terminal for executing the business process provided by the above embodiments belong to the same concept, and the detailed implementing procedure is shown in the embodiments of method, which is not elaborated herein.

Another exemplary embodiment of the present disclosure provides a system for executing a business process, the system including a server and a first terminal, wherein
the first terminal receives a business process instruction in a remote verification mode inputted by a user;
sends a business process request to the server, the business process request carrying a target identification; and
the server receives the business process request sent by the first terminal, the business process request carrying the target identification; determines a second terminal corresponding to the target identification according to a pre-stored corresponding relationship between identification information and verification terminals, and sends a verification request to the second terminal; and when receiving a verification confirmation message sent by the second terminal, executes a business process corresponding to the business process request.

In the embodiments of the present disclosure, the server receives the business process request sent by the first terminal, the business process request carrying a target identification; the server determines a second terminal corresponding to the target identification according to the pre-stored corresponding relationship between the identification information and the verification terminals and sends a verification request to the second terminal; when receiving a verification confirmation message sent by the second terminal, the server executes a business process corresponding to the business process request. In this way, the user, when allowing other users to use his/her account to execute the business process, may directly use the verification terminal to verify the business process request without notifying the business executing password to the other users, thereby the account security may be improved.

Further another exemplary embodiment of the present disclosure provides a structural diagram of a server.

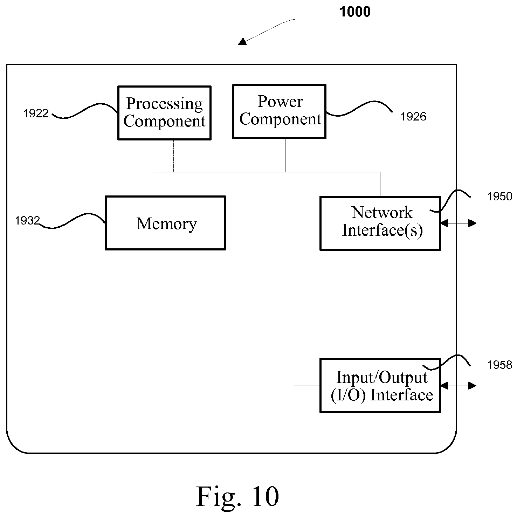

As shown in Fig. 10, the server 1000 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. In addition, the processing component 1922 is configured to execute instructions so as to perform the above method.

The server 1000 may also include a power component 1926 configured to perform power management of the server 1000, wired or wireless network interface(s) 1950 configured to connect the server 1000 to a network, and an input/output (I/O) interface 1958. The server 1000 may operate based on an operating system stored in the memory 1932, such as Windows Server^{™}, Mac OS X^{™}, Unix^{™}, Linux^{™}, FreeBSD^{™}, or the like.

The server 1000 may include the memory and one or more programs, wherein one or more programs are stored in the memory, and one or more programs configured to be executed by one or more processors include instructions for the following operations:
receiving a business process request sent by a first terminal, wherein the business process request carries a target identification;
determining a second terminal corresponding to the target identification according to a pre-stored corresponding relationship between identification information and verification terminals, and sending a verification request to the second terminal; and
when receiving a verification confirmation message sent by the second terminal, executing a business process corresponding to the business process request.

Alternatively, the executing the business process corresponding to the business process request when receiving the verification confirmation message sent by the second terminal includes:
when receiving the verification confirmation message sent by the second terminal, and a verification password carried in the verification confirmation message is matched with a pre-stored verification password corresponding to the target identification, executing the business process corresponding to the business process request.

Alternatively, the business process request carries a terminal identification of the first terminal; and
the sending the verification request to the second terminal includes:
sending the verification request carrying the terminal identification of the first terminal to the second terminal.

Alternatively, the method further includes:
receiving a verification terminal setting request sent by the first terminal; and
determining a target account corresponding to the target identification, and sending a terminal identification of at least one terminal which has logged in to the target account to the first terminal;
receiving a terminal identification of the selected second terminal sent by the first terminal; and
adding the target identification and the second terminal into the corresponding relationship between the identification information and the verification terminals.

In the embodiments of the present disclosure, the server receives the business process request sent by the first terminal, the business process request carrying a target identification; the server determines a second terminal corresponding to the target identification according to the pre-stored corresponding relationship between the identification information and the verification terminals and sends a verification request to a second terminal; when receiving a verification confirmation message sent by the second terminal, the server executes a business process corresponding to the business process request. In this way, the user, when allowing other users to use his/her account to execute the business process, may directly use the verification terminal to verify the business process request without notifying the business executing password to the other users, thereby the account security may be improved.

Still another exemplary embodiment of the present disclosure provides a structural diagram of a terminal, and the terminal may be a mobile phone, a tablet computer, a smart TV, and the like.

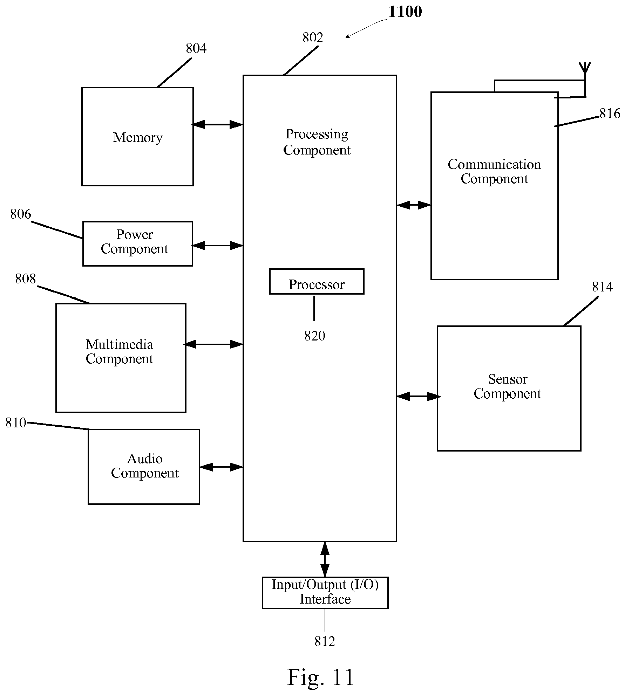

As shown in Fig. 11, the terminal 1100 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 1100, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 1100. Examples of such data include instructions for any applications or methods operated on the terminal 1100, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 1100. The power component 806 may include a power management system, one or more power sources, and any other components associated with the generation, management, and distribution of power in the terminal 1100.

The multimedia component 808 includes a screen providing an output interface between the terminal 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 1100 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 1100 is in an operation mode, such as a call mode, a recording mode, and a voice recognition mode. The received audio signal may be further stored in the memory 804 or transmitted via the communication component 816.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 1100. For instance, the sensor component 814 may detect an open/closed status of the terminal 1100, relative positioning of components, e.g., the display and the keypad, of the terminal 1100, a change in position of the terminal 1100 or a component of the terminal 1100, a presence or absence of user contact with the terminal 1100, an orientation or an acceleration/deceleration of the terminal 1100, and a change in temperature of the terminal 1100. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 1100 and other devices. The terminal 1100 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal 1100, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by a processor of the terminal, enables the terminal to perform the above method, the method including:
receiving a business process instruction in a remote verification mode inputted by a user; and
sending a business process request to a server, wherein the business process request carries a target identification for enabling the server to determine a second terminal corresponding to the target identification according to a pre-stored corresponding relationship between identification information and verification terminals, send a verification request to the second terminal, and when receiving a verification confirmation message sent by the second terminal, execute a business process corresponding to the business process request.

Alternatively, the method further includes:
receiving a verification terminal setting instruction inputted by a user, and sending a verification terminal setting request to the server;
receiving a terminal identification of at least one terminal which has logged in to a target account corresponding to the target identification;
displaying the received terminal identification of at least one terminal; and
when receiving a verification terminal selecting instruction inputted by the user, sending the terminal identification of the second terminal selected by the verification terminal selecting instruction to the server.

In the embodiments of the present disclosure, the server receives the business process request sent by the first terminal, the business process request carrying a target identification; the server determines a second terminal corresponding to the target identification according to the pre-stored corresponding relationship between the identification information and the verification terminals and sends a verification request to the second terminal; when receiving a verification confirmation message sent by the second terminal, the server executes a business process corresponding to the business process request. In this way, the user, when allowing other users to use his/her account to execute the business process, may directly use the verification terminal to verify the business process request without notifying the business executing password to the other users, thereby the account security may be improved.

## Claims

1. A method for executing a business process, comprising:
receiving (103) a business process request sent by a first terminal, wherein the business process request carries a target identification;
determining a second terminal corresponding to the target identification according to a pre-stored corresponding relationship between identification information and verification terminals, and sending a verification request to the second terminal (104); and
when receiving a verification confirmation message sent by the second terminal, executing (105) a business process corresponding to the business process request.

2. The method of claim 1, wherein the executing (105) the business process corresponding to the business process request when receiving the verification confirmation message sent by the second terminal comprises:
when receiving the verification confirmation message sent by the second terminal, and a verification password carried in the verification confirmation message is matched with a pre-stored verification password corresponding to the target identification, executing the business process corresponding to the business process request.

3. The method of claim 1, wherein the business process request carries a terminal identification of the first terminal; and
the sending (104) the verification request to the second terminal comprises:
sending the verification request carrying the terminal identification of the first terminal to the second terminal.

4. The method of claim 1, further comprising:
receiving (202) a verification terminal setting request sent by the first terminal; and
determining (202) a target account corresponding to the target identification, and sending to the first terminal a terminal identification of at least one terminal which has logged in to the target account;
receiving (204) a terminal identification of a selected second terminal sent by the first terminal; and
adding (205) the target identification and the second terminal into the corresponding relationship between the identification information and the verification terminals.

5. A method for executing a business process, comprising:
receiving (101) a business process instruction in a remote verification mode inputted by a user; and
sending (102) a business process request to a server, wherein the business process request carries a target identification for enabling the server to determine a second terminal corresponding to the target identification according to a pre-stored corresponding relationship between identification information and verification terminals, send a verification request to the second terminal, and when receiving a verification confirmation message sent by the second terminal, execute a business process corresponding to the business process request.

6. The method of claim 5, further comprising:
receiving a verification terminal setting instruction inputted by a user, and sending a verification terminal setting request to the server (201);
receiving (203) a terminal identification, sent from the server, of at least one terminal which has logged in to a target account corresponding to the target identification;
displaying (203) the received terminal identification of at least one terminal; and
when receiving a verification terminal selecting instruction inputted by the user, sending (203) the terminal identification of the second terminal selected by the verification terminal selecting instruction to the server.

7. A server, comprising:
a receiving module (610) configured to receive a business process request sent by a first terminal, wherein the business process request carries a target identification;
a sending module (620) configured to determine a second terminal corresponding to the target identification carried in the business process request received by the receiving module (610) according to a pre-stored corresponding relationship between identification information and verification terminals, and send a verification request to the second terminal; and
an executing module (630) configured to, when receiving a verification confirmation message sent by the second terminal, execute a business process corresponding to the business process request.

8. The server of claim 7, wherein the executing module (630) is configured to:
when receiving the verification confirmation message sent by the second terminal, and a verification password carried in the verification confirmation message is matched with a pre-stored verification password corresponding to the target identification, execute the business process corresponding to the business process request.

9. The server of claim 7, wherein the business process request carries a terminal identification of the first terminal; and
the sending module (620) is configured to:
send the verification request carrying the terminal identification of the first terminal to the second terminal.

10. The server of claim 7, wherein the receiving module (610) is further configured to receive a verification terminal setting request sent by the first terminal;
the sending module (620) is further configured to determine a target account corresponding to the target identification, and send to the first terminal a terminal identification of at least one terminal which has logged in to the target account;
the receiving module (610) is further configured to receive a terminal identification of a selected second terminal sent by the first terminal; and
the server further comprises:
an adding module (640) configured to add the target identification and the second terminal into the corresponding relationship between the identification information and the verification terminals.

11. A first terminal, comprising:
a receiving module (710) configured to receive a business process instruction in a remote verification mode inputted by a user; and
a sending module (720) configured to send a business process request corresponding to the business process instruction received by the receiving module (710) to a server, wherein the business process request carries a target identification for enabling the server to determine a second terminal corresponding to the target identification according to a pre-stored corresponding relationship between identification information and verification terminals, send a verification request to the second terminal, and when receiving a verification confirmation message sent by the second terminal, execute a business process corresponding to the business process request.

12. The first terminal of claim 11, wherein the sending module (720) is further configured to:
receive a verification terminal setting instruction inputted by a user, and send a verification terminal setting request to the server;
the receiving module (710) is further configured to:
receive a terminal identification of at least one terminal which has logged in to a target account corresponding to the target identification sent by the server;
the first terminal further comprises:
a displaying module (730) configured to display the received terminal identification of at least one terminal; and
the sending module (720) is further configured to, when receiving a verification terminal selecting instruction inputted by the user, send the terminal identification of the second terminal selected by the verification terminal selecting instruction to the server.

13. A system for executing a business process, the system comprising a server and a first terminal, wherein
the first terminal receives a business process instruction in a remote verification mode inputted by a user andsends a business process request to the server, the business process request carrying a target identification; and
the server receives the business process request sent by the first terminal, the business process request carrying the target identification; determines a second terminal corresponding to the target identification according to a pre-stored corresponding relationship between identification information and verification terminals, and sends a verification request to the second terminal; and when receiving a verification confirmation message sent by the second terminal, executes a business process corresponding to the business process request.

14. A computer program, which when executed on a processor of a server, performs a method according to any one of claims 1 to 4.

15. A computer program, which when executed on a processor of a first terminal, performs a method according to any one of claims 5 to 6.
